# EUROPÄISCHE PATENTSCHRIFT

(11) **EP 0 387 585 B1**
(45) Veröffentlichungstag und Bekanntmachung des Hinweises auf die Patenterteilung: **23.02.1994**
(21) Anmeldenummer: 90103727.5
(22) Anmeldetag: 26.02.1990
(51) Int. Cl.: H02G 11/00, H01B 7/06, H01R 35/02

(54) **Flacchkabelspirale**
Flat cable spirals
Spirale de câble plat

(30) Priorität: 28.02.1989 DE 3906308
(43) Veröffentlichungstag der Anmeldung: 19.09.1990
(73) Patentinhaber: W.L. Gore & Associates GmbH, 85636 Putzbrunn (DE)
(72) Erfinder: Rescher, Wolf, D-8542 Roth (DE)
(74) Vertreter: Klunker . Schmitt-Nilson . Hirsch

(56) Entgegenhaltungen:
- EP-A- 0 217 336
- DE-B- 2 742 900
- PATENT ABSTRACTS OF JAPAN vol. 8, no. 280 (M-347)(1717) 21 Dezember 1984, & JP-A-59 149276 (HITACHI DENSEN) 27 August 1984,

## Beschreibung

Die Erfindung betrifft eine Flachkabelspirale gemäß Oberbegriff des Anspruchs 1 oder 2.

Es ist häufig erforderlich, elektrische Vorrichtungen, die um eine Drehachse hin- und herdrehbar sind, elektrisch mit einer feststehenden Vorrichtung zu verbinden. Eine Lösung für eine derartige Drehverbindung sind Schleifkontakte. Diese sind jedoch störanfällig und sind somit für Anwendungen, bei denen es auf hohe Funktionssicherheit ankommt, nicht einsetzbar. Eine andere Möglichkeit ist die Verwendung einer Kabelspirale, deren einer Endpunkt mit der feststehenden Vorrichtung und deren anderer Endpunkt mit der drehbaren Vorrichtung verbunden ist. Ein Beispiel für eine solche Kabelspirale ist in der DE-37 15 118 A1 gezeigt. Dort dient die Kabelspirale zur elektrischen Versorgung eines sich drehenden Roboters. Um auch bei sehr schnellen Drehbewegungen des Roboters Verwerfungen in der Kabelspirale und abnutzendes Aneinanderschlagen der einzelnen Spiralenlagen zu vermeiden, ist diese bekannte Kabelspirale sowohl auf den zur Außenseite als auch auf den zur Innenseite der Spirale weisenden Seiten des die Kabelspirale bildenden Kabels mit ausdrehend bzw. eindrehend vorspannenden elastischen Strängen versehen.

Ein weiteres Beispiel, bei welchem eine sich drehende Vorrichtung elektrisch mit einer feststehenden Vorrichtung verbunden werden muß, ist das in der Prallplatte des Lenkrades eines Kraftfahrzeuges untergebrachte Airbag-System. Dessen Versorgung kann über eine Flachkabelspirale durchgeführt werden, die in einem ringförmigen zylindrischen Gehäuse untergebracht ist, das auf die Lenksäule des Lenkrades aufgeschoben ist. Dabei sind die beiden Enden der Flachkabelspirale aus dem Zylindergehäuse herausgeführt, um einen Endes mit einer feststehenden elektrischen Vorrichtung und anderen Endes mit dem Airbag-System verbunden zu werden. Um die Lenkbewegung des Lenkrades ungehindert mitmachen zu können, muß die Flachkabelspirale bei gewöhnlichen Personenkraftwagen im allgemeinen gegenüber der Drehlage des Lenkrades bei Geradeausfahrt eine Mindestanzahl, beispielsweise zwei volle Umdrehungen im Uhrzeigersinn und eine gleiche Anzahl volle Umdrehungen im Gegenuhrzeigersinn, also insgesamt mindestens z. B. vier volle Umdrehungen mitmachen können. Damit die Flachkabelspirale von dem sie aufnehmenden Gehäuse nicht in ihrer Drehbewegung behindert wird, muß zwischen der Flachkabelspirale und den Innenwänden des Gehäuses genügend freier Raum sein.

Kraftfahrzeuge sind bekanntlich erheblichen Erschütterungen ausgesetzt, nämlich wegen der Motorvibration und beispielsweise beim Fahren auf schlechter Fahrbahn. Es hat sich nun gezeigt, daß herkömmliche Kabelspiralen zur elektrischen Verbindung von Airbag-Systemen bei Fahrerschütterungen zu Klappern und Rattern führen. Dies ist störend und insbesondere bei höherwertigen Fahrzeugen, wie sie mit einem AirbagSystem ausgerüstete Kraftfahrzeuge meist darstellen, nicht akzeptabel.

Die Klapperneigung wird verstärkt, wenn man die Kabelspirale mit einer Spiralfeder in Spiralform hält, die sich zwischen den Spirallagen der Kabelspirale befindet und über die Seitenränder der Kabelspirale übersteht, wie es aus der EP-A-0 217 336 bekannt ist.

Man hat schon versucht, das Klappern der Kabelspirale dadurch zu unterbinden, daß in das die Kabelspirale enthaltende Gehäuse ein Fett eingefüllt wird. Es hat sich aber gezeigt, daß das Fett nach kurzer Zeit verhärtet und zu einem Verkleben der einzelnen Kabellagen führen kann.

Dieses Verkleben führt beim Drehen des Lenkrades zu einer Schlaufenbildung des Flachkabels an mindestens einem der beiden Spiralenden. An dieser Schlaufe wird das Kabel scharf geknickt und über einen extrem kleinen Biegeradius abgerollt. Dies führt nicht nur zu einer starken mechanischen Belastung des Kabels sondern resultiert auch in einer starken Zugbelastung an der Stelle, an welcher die Leiter des Kabels an Anschlüsse eines Kabelverbinders angequetscht sind. Es besteht die Gefahr, daß die Kabelleiter in der Biegezone brechen. Bestandteile des Fettes wie Säure oder Silikon können an den Anquetschstellen zu Korrosion bzw. Isolation führen, die zunächst zu einer Übergangswiderstandserhöhung und/oder zu einem Brechen der angequetschten Leiter führen kann.

Eine Aufgabe der Erfindung besteht darin, das Klappern einer Erschütterungen ausgesetzten Kabelspirale in einem sie umgebenden Gehäuse ohne den Einsatz von Fett und dergleichen zu unterbinden.

Eine Lösung dieser Aufgabe ist im Anspruch 1 angegebenen. Weiterbildungen der Erfindung sind in den Unteransprüchen angegeben.

Eine Ausführungsform der Erfindung besteht darin, daß die Seitenränder des Dämpfungsbandes um die Seitenkanten des Flachkabels herumgelegt werden, so daß beide Schmalseiten des Flachkabels vom Dämpfungsband bedeckt sind.

Bei einer anderen Ausführungsform der Erfindung wird das Dämpfungsband lediglich mit der Flachkabelspirale mitgewickelt, und zwar so, daß das Dämpfungsband über beide Seitenränder des Flachkabels übersteht. Vorzugsweise werden dabei die Flachkabelspirale und das mitgewickelte Dämpfungsband so stramm gewickelt, daß sie ihre relative axiale Positionierung zueinander beibehalten und werden in diesem Zustand in das Gehäuse eingesetzt. Beim Einsetzen der solchermaßen mit dem Dämpfungsband versehenden Flachkabelspirale in das Gehäuse und bei nachfolgenden Erschütterungsbewegungen werden die über die Seitenränder des Flachkabels überstehenden Teile des Dämpfungsbandes durch das Anstossen an den Gehäuseinnenwänden umgeknickt, vorwiegend in knautschender Weise, so daß dann seitliche Abpolsterungen auf beiden Seiten der Flachkabelspirale entstehen.

Es besteht die Möglichkeit, einzelne Dämpfungsbandabschnitte zwischen je benachbarte Spirallagen einzufügen. Die herstellungsmäßig einfachere Art ist es, vor dem Wickeln der Flachkabelspirale das Dämpfungsband an den beiden Enden des Flachkabels zu befestigen und dann das Flachkabel und das Dämpfungsband gemeinsam zur Spiralform zu wickeln. Dabei bleibt das Dämpfungsband zwischen benachbarten Lägen des Flachkabels lose, d.h. es ist mit den benachbarten Lagen des Flachkabels nicht verbunden.

Als Dämpfungsbandmaterial eignen sich besonders gut Polytetrafluoräthylen (PTFE), Polyimid, Polyamid, Polyester, Polyäthylen, Polyetherketon oder in ihren Eigenschaften vergleichbare Werkstoffe oder Kombinationen hiervon. Als Dämpfungsband eignen sich auch gefüllte Materialien, die durch die Füllung beispielsweise mit Graphit, Eisen oder ähnlichem elektrisch halbleitend werden. Vorteilhaft ist auch die Verwendung antistatischer Dämpfungsbänder.

Für das Dämpfungsband sollten Materialien verwendet werden, die eine ausreichend gleitfähige Oberfläche aufweisen, d.h., daß die Oberflächenreibung des Dämpfungsbandes so gering ist, daß ein Mitnehmen des Kabels durch das Dämpfungsband oder umgekehrt verhindert wird. Dadurch werden Reibungen zwischen den einzelnen Lagen der Flachkabelspirale während der Ein- und der Ausdrehbewegung praktisch eliminiert.

Das Dämpfungsband sollte möglichst dünn sein, beispielsweise 0,025 mm, um einerseits an seinen Seitenrändern leicht umknickbar zu sein und andererseits wenig Volumen innerhalb des zylinderförmigen Gehäuses einzunehmen und die Drehfreiheit der Flachkabelspirale nach beiden Seiten, d.h., die von der Flachkabelspirale maximal mitgemachten Umdrehungen nicht merklich einzuschränken. Bei den dünnen Flachkabeln, wie sie herkömmlicherweise zur elektrischen Verbindung von Airbag-System benutzt werden, ist ein seitlicher Überstand des Dämpfungsbandes über jeden Seitenrand des Flachkabels von mindestens etwa 1 mm empfehlenswert. Bei Verwendung dickerer Flachkabel sollte der seitliche Überstand des Dämpfungsbandes entsprechend höher sein.

Die Erfindung wird nun anhand einer Ausführungsform näher erläutert. In den zugehörigen Zeichnungen zeigen:
- Figur 1: eine Ausführungsform einer erfindungsgemäßen Flachkabelspirale in nicht-maßstabsgerechter, schematischer Darstellungsweise;
- Figur 2: eine vergrößerte, schematische Querschnittsdarstellung durch die Flachkabelspirale gemäß Figur 1; und
- Figur 3: eine Schnittdarstellung einer erfindungsgemäßen Flachkabelspirale in einem Gehäuse.

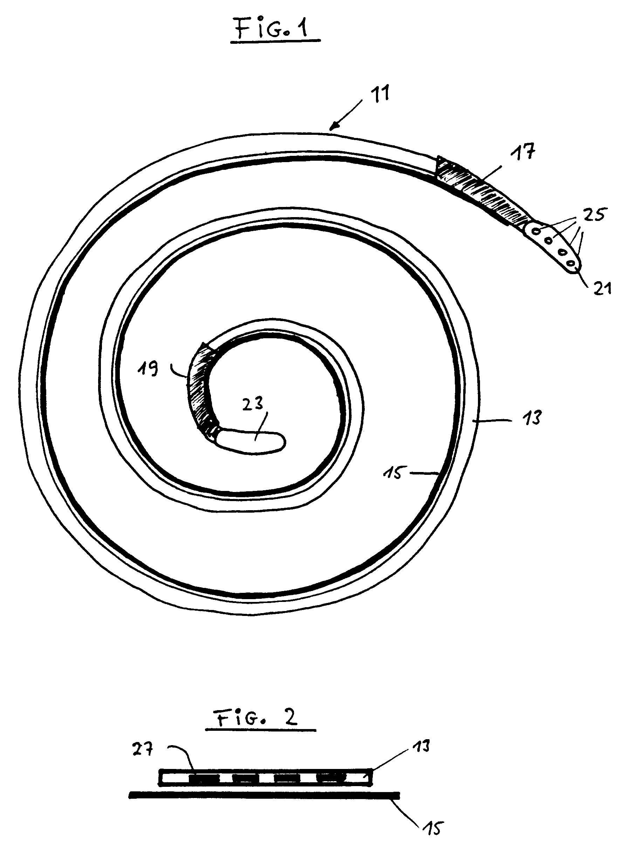

Figur 1 zeigt eine erfindungsgemäße Flachkabelspirale 11 ohne Gehäuse. Dabei ist ein Flachkabel 13 zusammen mit einem Dämpfungsband 15 in Spiralform gewickelt und weist an seinem äußeren Ende einen Knickschutz 17 und an seinem inneren Ende einen Knickschutz 19 auf. An das äußere Kabelende der Flachkabelspirale 11 ist ein äußerer Verbinder 21 angeschlossen. An das innere Kabelende ist ein innerer Verbinder 23 angeschlossen. Der äußere Verbinder 21 ist an eine (nicht-dargestellte) feststehende Vorrichtung angeschlossen. Der innere Verbinder 23 ist an eine (nicht-dargestellte) drehende Vorrichtung angeschlossen. Aus den Verbindern 21 und 23 sind isolierte Leiterdrähte herausgeführt. Für ein vieradriges Flachkabel 13 sind am äußeren Verbinder 21 vier Leiterdrähte 25 angedeutet. Anstelle der an das Flachkabel angeschlossenen Leiterdrähte 25 können auch die Flachkabelenden selbst aus den Spiralenden herausgeführt sein.

Das Dämpfungsband 15 ist bei der in Figur 1 dargestellten Ausführungsform an den beiden Knickschutzvorrichtungen 17 und 19 außen befestigt. Es besteht auch die Möglichkeit, die Knickschutzvorrichtungen 17 und 19 um die Flachkabelenden und die Dämpfungsbandenden gemeinsam herum zu montieren.

Figur 2 zeigt einen Querschnitt durch das Flachkabel 13 mit vier Flachleitern 27 und das Dämpfungsband 15. Wie die Darstellung zeigt, ist das Dämpfungsband 15 breiter als das Flachkabel 13 und ist relativ zum Flachkabel 13 so angeordnet, daß es an beiden Längsrändern des Flachkabels 13 etwa gleich weit übersteht. Bei einer praktischen Ausführungsform mit einer Flachkabelbreite von 11 mm beträgt die Breite des Dämpfungsbandes 15 13 mm, so daß das Dämpfungsband 15 auf beiden Seiten des Flachkabels 13 um 1 mm übersteht.

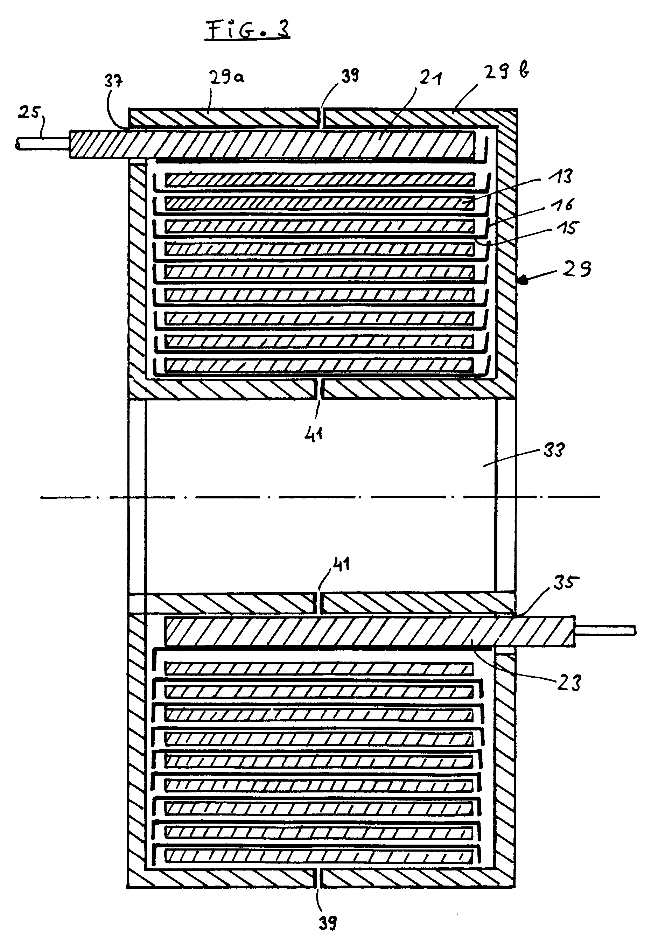

Figur 3 zeigt eine erfindungsgemäße Flachkabelspirale in einem Gehäuse 29. Das Gehäuse 29 weist eine Zentralöffnung 33 auf, mittels welcher das Gehäuse 29 auf die Lenksäule des Kraftfahrzeuges aufgeschoben wird. Benachbart der Zentralöffnung 33 befindet sich auf der in Figur 3 rechten Seitenwand des Gehäuses 29 eine Verbinderdurchführungsöffnung 35. Die gegenüberliegende Seitenwand weist benachbart der Umfangswand des Gehäuses 29 eine äußere Verbinderdurchführungsöffnung 37 auf. Durch die innere Verbinderdurchführungsöffnung 35 reicht der am inneren Ende der Flachkabelspirale 11 angeordnete Verbinder 23 hindurch. Durch die äußere Verbinderdurchführungsöffnung 37 reicht der am äußeren Ende der Flachkabelspirale 11 angeordnete Verbinder 21 hindurch. In dem ringförmigen Zwischenraum zwischen Außenumfangswand und Zentralöffnung 33 des Gehäuses 29 befinden sich die Lagen der Flachkabelspirale 11, wobei jede Lage durch eine Lage des Flachkabels 13 und eine Lage des Dämpfungsbandes 15 gebildet wird. Beidseits einer jeden Lage der Flachkabelspirale 11 ist das Dämpfungsband 15 bei 16 seitlich umgebogen, so daß die Seitenkanten des Flachkabels 13 in Dämpfungsbandmaterial eingebettet sind.

Bei der Darstellung in Figur 3 weisen die umgebogenen Seitenränder 16 des Dämpfungsbandes 15 alle in Richtung zur Umfangsfläche des Gehäuses 29. Es ist aber für die Zwecke der Erfindung ebenso gut, die Seitenränder 16 des Dämpfungsbandes 15 in Richtung zur Zentralöffnung 33 hin umzubiegen. Bei der Ausführungsform, bei welcher das Dämpfungsband nicht vor dem Einlegen der Flachkabelspirale 11 in das Gehäuse 29 um die Seitenränder des Flachkabels 13 umgeschlagen wird sondern das Umbiegen der Seitenränder des Dämpfungsbandes 15 durch Anstossen an den Seitenwänden des Gehäuses 29 geschieht, werden sowohl Lagen des Dämpfungsbandes 15 vorhanden sein, deren Seitenränder in die eine Richtung umgebogen sind, als auch Lägen, deren Seitenränder in die andere Richtung umgebogen sind. Verschiedene Umbiegerichtungen der Seitenränder des Dämpfungsbandes 15 werden selbst in ein und derselben Spirallage vorkommen.

Wie in Figur 3 schematisch angedeutet ist, besteht das dosenförmige Gehäuse 29 aus zwei deckelartigen Gehäuseteilen 29a und 29b. Entsprechend sind in der Schnittdarstellung in Figur 3 Trennspalte 39,41 angedeutet.

Im praktischen Einsatz zum elektrischen Anschluß eines im Prallkopf des Lenkrades untergebrachten Airbag-Systems wird das Gehäuseteil 29a nach dem Aufschieben auf die (nicht gezeigte) Lenksäule feststehend montiert. Das Gehäuseteil 29b dagegen wird an der Lenksäule mit dieser mitdrehend montiert. Bei jedem Lenkvorgang verdreht sich das Gehäuseteil 29b relativ zum Gehäuseteil 29a, so daß sich die Flachkabelspirale 11 je nach Lenkdrehrichtung ein- oder ausdreht.

## Patentansprüche

1. Flachkabelspirale zur elektrischen Verbindung mit einer um eine Drehachse hin- und herdrehbaren elektrischen Einrichtung, wobei die Flachkabelspirale (11) in einem sie umgebenden Gehäuse (29) angeordnet ist,
dadurch **gekennzeichnet**,
daß zwischen benachbarte Lagen des Flachkabels (13) der Flachkabelspirale (11) ein dünnes Dämpfungsband (15) mit gleitfähiger Oberfläche gepackt ist, das mindestens um die doppelte Flachkabeldicke breiter ist als das FlachKabel (13) und dessen über die Seitenränder des Flachkabels (13) überstehende Teile durch Anstoßen an Gehäuseinnenwänden und dadurch erfolgtes Umknicken, vorzugsweise in knautschender Weise, seitliche Abpolsterungen auf beiden Seiten der Flachkabelspirale (11) bilden.

2. Flachkabelspirale zur elektrischen Verbindung mit einer um eine Drehachse hin- und herdrehbaren elektrischen Einrichtung, wobei die Flachkabelspirale (11) in einem sie umgebenden Gehäuse (29) angeordnet ist,
dadurch **gekennzeichnet**,
daß zwischen benachbarte Lagen des Flachkabels (13) der Flachkabelspirale (11) ein dünnes Dämpfungsband (15) mit gleitfähiger Oberfläche gepackt ist, das mindestens um die doppelte Flachkabeldicke breiter ist als das Flachkabel (13) und dessen beide Seitenränder (16) um die beiden Flachkabelkanten herumgeschlagen sind.

3. Flachkabelspirale nach Anspruch 1 oder 2,
dadurch gekennzeichnet,
daß sich das Dämpfungsband (15) einstückig zwischen den Enden der Flachkabelspirale (11) erstreckt.

4. Flachkabelspirale nach Anspruch 3,
dadurch gekennzeichnet,
daß das Dämpfungsband (15) an den Enden der Flachkabelspirale (11) an dem Flachkabel (13) oder an an den Flachkabelenden angebrachten Verbindern (21, 23) festgelegt ist.

5. Flachkabelspirale nach einem der Ansprüche 1,3 oder 4,
dadurch gekennzeichnet,
daß das Dämpfungsband (15) mit seinen Seitenrändern über die Seitenkanten des Flachkabels (13) hervorstehend in das Gehäuse (29) eingesetzt ist.

6. Flachkabelspirale nach einem der Ansprüche 1 bis 5,
dadurch gekennzeichnet,
daß das Gehäuse (29) eine ringförmig zylindrische Gehäusedose ist, die auf die Lenksäule eines Kraftfahrzeugs aufgeschoben ist und eine Flachkabelspirale (11) zum elektrischen Anschluß einer mit dem Lenkrad mitdrehenden Vorrichtung, insbesondere eines Airbag-Systems, eines Geschwindigkeitsregelungs-Systems, einer Hupe oder eines Systems zur automatischen Anpassung des Lenkrades an den jeweiligen Fahrer, enthält.

7. Flachkabelspirale nach Anspruch 6,
dadurch gekennzeichnet,
daß die Gehäusedose eine Durchtrittsöffnung (37) für ein feststehendes Ende und eine Durchtrittsöffnung (35) für ein mit der elektrischen Einrichtung mitdrehendes Ende der Flachkabelspirale (11) aufweist und daß die Gehäusedose in Radialrichtung in zwei Gehäuseteile (29a, 29b) unterteilt ist, die relativ zueinander verdrehbar sind und von denen das eine Gehäuseteil (29a) die Durchtrittsöffnung (37) für das feststehende Spiralenende aufweist und feststehend montiert ist,während das andere Gehäuseteil (29b) die Durchtrittsöffnung (35) für das mitdrehende Kabelende aufweist und mit der Lenksäule bzw. dem Lenkrad mitdrehbar montiert ist.

8. Flachkabelspirale nach einem der Ansprüche 1 bis 7,
dadurch gekennzeichnet,
daß das Material des Dämpfungsbandes (15) ausgewählt ist aus Polytetrafluoräthylen, Polyimid, Polyamid, Polyester, Polyäthylen, Polyetheretherketon oder in ihren Eigenschaften vergleichbaren Werkstoffen oder einer Kombination dieser Materialien.

9. Flachkabelspirale nach einem der Ansprüche 1 bis 8,
dadurch gekennzeichnet,
daß das Dämpfungsband (15) aus mit Graphit-, Eisen- oder dergleichen Partikeln gefülltem, z. B. halbleitenden Material und/oder aus antistatischem Material gebildet ist.

10. Flachkabelspirale nach einem der Ansprüche 1 bis 9,
dadurch gekennzeichnet,
daß das Dämpfungsband (15) eine Dicke von etwa 0,025 mm aufweist.

11. Flachkabelspirale nach einem der Ansprüche 1 bis 10,
dadurch gekennzeichnet,
daß das Dämpfungsband (15) mindestens etwa 2 mm breiter ist als das Flachkabel (13) der Flachkabelspirale (11).

## Claims

1. A flat cable spiral for electrical connection to an electrical means rotatable in reciprocating manner about an axis of rotation, said flat cable spiral (11) being arranged in a casing (29) surrounding the same, characterized in that a thin damping band (15) having a sliding surface is packed between adjacent layers of the flat cable (13) of the flat cable spiral (11), said damping band (15) being wider than said flat cable (13) by at least twice the flat cable thickness, and the parts thereof which project beyond the lateral edges of the flat cable (13) constituting, preferably in cushioning manner, lateral damping means on both sides of the flat cable spiral (11) by abutting against casing inner walls and by being bent thereby.

2. A flat cable spiral for electrical connection to an electrical means rotatable in reciprocating manner about an axis of rotation, said flat cable spiral (11) being arranged in a casing (29) surrounding the same, characterized in that a thin damping band (15) having a sliding surface is packed between adjacent layers of the flat cable (13) of the flat cable spiral (11), said damping band (15) being wider than said flat cable (13) by at least twice the flat cable thickness and the two lateral edges (16) thereof being placed around the two flat cable edges.

3. A flat cable spiral according to claim 1 or 2,
characterized in that the damping band (15) extends integrally between the ends of the flat cable spiral (11).

4. A flat cable spiral according to claim 3,
characterized in that the damping band (15) at the ends of the flat cable spiral (11) is fixed to the flat cable (13) or to connectors (21, 23) attached to the flat cable ends.

5. A flat cable spiral according to any one of claims 1, 3 or 4,
characterized in that the damping band (13) is inserted into the casing (29) with its lateral edges projecting beyond the lateral edges of the flat cable (13).

6. A flat cable spiral according to any one of claims 1 to 5,
characterized in that the casing (29) is an annular cylindrical casing box which is slid onto the steering column of a motor vehicle and contains a flat cable spiral (11) for electrical connection to a device rotating together with the steering wheel, said device being in particular an airbag system, a speed regulating system, a horn, or a system for automatic matching of the steering wheel to the particular driver.

7. A flat cable spiral according to claim 6,
characterized in that said casing box has a through-passage (37) for a stationary end of the flat-cable spiral (11) and a through-passage (35) for an end of the flat cable spiral (11) rotating together with said electrical means, and in that the casing box is subdivided in radial direction into two casing parts (29a, 29b) which are rotatable relative to each other, one of said casing parts (29a) containing the through-passage (37) for the stationary spiral end and being mounted in stationary manner, and the other casing part (29b) containing the through-passage (35) for the concomitantly rotating cable end and being mounted so as to be rotatable concomitantly with the steering column or the steering wheel.

8. A flat cable spiral according to any one of claims 1 to 7,
characterized in that the material of the damping band (15) is selected from polytetrafluoroethylene, polyimide, polyamide, polyester, polyethylene, polyether ketone, or materials having comparable properties or a combination of these materials.

9. A flat cable spiral according to any one of claims 1 to 8,
characterized in that the damping band (15) is formed of e.g. semiconducting material filled with graphite-, iron- or the like particles, and/or of antistatic material.

10. A flat cable spiral according to any one of claims 1 to 9,
characterized in that the damping band (15) has a thickness of approx. 0.025 mm.

11. A flat cable spiral according to any one of claims 1 to 10,
characterized in that the damping band (15) is at least approx. 2 mm wider than the flat cable (13) of the flat cable spiral (11).

## Revendications

1. Spirale de câble plat destinée au raccordement électrique avec un dispositif électrique capable de tourner autour d'un axe de rotation dans un sens et dans l'autre, ladite spirale de câble plat (11) étant agencée dans un boîtier qui l'entoure (29), caractérisée en ce qu'entre les couches voisines du câble plat (13) de la spirale de câble plat (11) est enserrée une mince bande d'amortissement (15) avec une surface glissante, qui est plus large que le câble plat d'au moins le double de l'épaisseur du câble plat (13) et dont les parties dépassant sur les bordures latérales du câble plat (13) forment, par venue en butée sur les parois internes du boîtier et du fait du repliage qui en résulte, de préférence dans un mode de froissement, des rembourrages latéraux sur deux côtés de la spirale de câble plat (11).

2. Spirale de câble plat destinée au raccordement électrique avec un dispositif électrique capable de tourner autour d'un axe de rotation dans un sens et dans l'autre, la spirale de câble plat (11) étant agencée dans un boîtier (29) qui l'entoure, caractérisée en ce qu'entre les couches voisines du câble plat (13) de la spirale de câble plat (11) est enserrée une mince bande d'amortissement (15) avec une surface glissante, qui est plus large que le câble plat (13) d'au moins le double de l'épaisseur du câble plat (13) et dont les deux bordures latérales (16) sont retournées autour des deux arêtes du câble plat.

3. Spirale de câble plat selon la revendication 1 ou 2, caractérisée en ce que la bande d'amortissement (15) s'étend d'une seule pièce entre les extrémités de la spirale de câble plat (11).

4. Spirale de câble plat selon la revendication 3, caractérisée en ce que la bande d'amortissement (15) est fixée sur les extrémités de la spirale de câble plat (11) sur le câble plat (13) ou sur des connecteurs (21, 23) agencés sur les extrémités de câble plat.

5. Spirale de câble plat selon l'une des revendications 1, 3 ou 4, caractérisée en ce que la bande d'amortissement (15) est insérée dans le boîtier (29) avec ses bordures latérales dépassant des arêtes latérales du câble plat (13).

6. Spirale de câble plat selon l'une des revendications 1 à 5, caractérisée en ce que le boîtier (29) est un récipient cylindrique de forme annulaire, qui est enfilé sur la colonne de direction d'un véhicule automobile et qui contient une spirale de câble plat (11) pour le raccordement électrique d'un dispositif suivant le mouvement de rotation du volant, notamment d'un système d'airbag, d'un système de régulation de vitesse, d'un avertisseur ou d'un système pour l'adaptation automatique du volant au conducteur considéré.

7. Spirale de câble plat selon la revendication 6, caractérisée en ce que le boîtier comprend une ouverture de passage (37) pour une extrémité fixe et une ouverture de passage (35) pour une extrémité de la spirale de câble plat (11) qui tourne avec le dispositif électrique, et en ce que le boîtier est subdivisé en direction radiale en deux parties de boîtier (29a, 29b), qui peuvent être tournées relativement l'une par rapport a l'autre et parmi lesquelles l'une des parties de boîtier (29a) comporte l'ouverture de passage (37) pour l'extrémité fixe de spirale et est montée fixement, tandis que l'autre partie de boîtier (29b) comporte l'ouverture de passage (35) pour l'extrémité de câble qui tourne conjointement et est montée de manière à pouvoir tourner conjointement avec la colonne de direction ou avec le volant.

8. Spirale de câble plat selon l'une des revendications 1 à 7, caractérisée en ce que le matériau de la bande d'amortissement (15) est choisi parmi le polytétrafluoroéthylène, polyimide, polyamide, polyester, polyéthylène, polyétheréthercétone ou des matériaux comparables dans leurs propriétés ou une combinaison de ces matériaux.

9. Spirale de câble plat selon l'une des revendications 1 à 8, caractérisée en ce que la bande d'amortissement (15) est formée de matériaux remplis par exemple de particules de graphite, de fer ou similaire, p.ex. des matériaux semi-conducteurs et/ou des matériaux antistatiques.

10. Spirale de câble plat selon l'une des revendications 1 à 9, caractérisée en ce que la bande d'amortissement (15) a une épaisseur d'environ 0,025 mm.

11. Spirale de câble plat selon l'une des revendications 1 à 10, caractérisée en ce que la bande d'amortissement (15) est plus large d'au moins 2 mm environ que le câble plat (13) de la spirale de câble plat (11).
